# EUROPEAN PATENT APPLICATION

(11) **EP 3 184 495 A1**
(43) Date of publication of application: **28.06.2017**
(21) Application number: 15382663.1
(22) Date of filing: 24.12.2015
(51) Int. Cl.: C03C 8/16, C25D 13/02

(54) **AN ENAMEL COMPOSITION FOR ELECTROPHORETIC PORCELAIN ENAMEL COATING**

(71) Applicant: Fundación Cidetec, 20009 Donostia-San Sebastián (ES)
(72) Inventor: GABIKAETXEBARRIA MARCOS, Iker, 48320 AJANGIZ (ES); MUÑOZ HOYUELOS, Jose María, 20009 DONOSTIA-SAN SEBASTIÁN (ES); PÉREZ GARCÍA, Rosalina, 20009 DONOSTIA-SAN SEBASTIÁN (ES); RODRÍGUEZ PARRA, Francisco Javier, 20009 DONOSTIA-SAN SEBASTIÁN (ES)
(74) Representative: ZBM Patents - Zea, Barlocci & Markvardsen

(57) **Abstract**

The present invention relates to an enamel composition comprising: a glass frit; from 0.1 % to 20% by weight of a stabilizer per 100g of the glass frit; from 0.001 % to 1 % by weight of an inorganic salt per 100g of the glass frit; from 0.01 % to 0.7% by weight of reducing agent per 100g of the glass frit; from 0% to 0.04% by weight of an anionic surfactant per 100g of the glass frit; from 40 to 100 mL of water per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; a process for its preparation; a process for the preparation of an enamel coating by an electrophoretic porcelain enamelling process using the enamel composition of the invention and the enamel coating obtainable by the process.

## Description

The present invention relates to the field of enamel coating. In particular, to an enamel composition useful as electrophoretic porcelain enamel coating agent. The present invention also relates to an electrophoretic porcelain enamel process using the enamel composition, and an electrophoretic porcelain enamel coating obtainable by the process of the invention.

### BACKGROUND ART

Ceramic porcelain and/or vitreous enamel coatings for steel have chemical and mechanical stability in different environments including acid, alkaline, high temperature and harsh working conditions. Therefore, they are widely used for a variety of consumer applications and for the protection of steel in many industrial chemical applications due to its indispensable corrosion protection.

Several enamelling techniques have been disclosed in the state of the art. Depending on the type of technology used, the enamelling can be done through different processes such as for example dipping, spraying, flow coating and electrophoretic porcelain enamelling (EPE) process (S. Pagliuca et al. "Porcelain (Vitreous) Enamels and Industrial Enamelling Processes. The preparation, application and properties of enamels" Chapter 10. Applications and Control, IEI, PEI, 3rd Ed., Italy, 2011 pages 446-449, 489-496; and "Pemco Enamel Manual", PEMCO Brugge bvba, 2nd Ed., Germany, 1975, pages110-127.

Particularly, EPE has been developed as deposition and surface finishing technique to allow the highest possible quality and the lowest costs. The EPE is a current-based enamelling technique, wherein the enamel particles and mill additions are suspended and negatively charged in aqueous media. Then, the enamel particles are electrophoretically deposited onto a workpiece (metal substrate) which is the anode and charged positively with the aid of direct current. Before the EPE process can begin, the anode and cathode are submerged in an enamel composition, and the necessary direct current then begins flowing between the electrodes. The suspended enamel particles, under an electric field, migrate to the anode to form a solid layer while electro-osmotic dewatering occurs. The charged enamel particles are securely attached to the anode and the excess of non-charged particles must be rinsed off to achieve a smooth surface finish when the enamel is fired.

The EPE process comprises several electrochemical reactions. In particular, at the anode, an electrochemical oxidation reaction occurs wherein oxygen is formed by the electrolysis of the aqueous solution (see Ec. 1) and Fe²⁺ is also formed at the phase boundary steel/enamel (see Ec. 2). The two electrochemical reactions have a negative impact on the quality of the enamel and are summarised below:

2*H*₂*O* → *O*₂ + 4*H⁺* + 4*e⁻* Ec. 1

*Fe* + 2*OH⁻* → *Fe*(*OH*)₂ + 2*e⁻* Ec. 2

However, the oxygen thus formed in the first electrochemical oxidation reaction leads to porous deposits and hence an accumulation of blisters, while iron hydroxide is incorporated into the deposited enamel layer which causes discoloration.

The oxygen formation can be suppressed by a strict limitation of current density, the application of a special pre-treatment and the addition of some halogenated anions such as chloride or bromide to the slip. The addition of some chlorides in the enamel suspension promotes another electrochemical reaction, the chlorine reaction (see Ec. 3):

2*Cl⁻* → *Cl*₂ + 2*e⁻* E°(V) = 1.36 vs. SHE Ec.3

The chloride anions (Cl⁻) can be adsorbed and react with some chemical elements present in the carbon steel substrates, at the phase boundary steel/enamel affecting negatively to the adhesion between the enamel coatings and the steel substrate, promoting pitting and erosion of the enamel coatings. Thus, enamels containing halogenated anions and obtained by EPE have inappropriate resistance to corrosion.

Therefore, from what is known in the art it is derived that there is still the need of providing an enhanced enamelling process to obtain enamel coatings having improved resistance to corrosion.

### SUMMARY OF THE INVENTION

Inventors have found a specific enamel composition comprising a specific amount of an inorganic salt whose anion is selected from the group consisting of nitrate, sulphate and phosphate, a fineness of grinding of the enamel suspension comprised from 0/16900 to 12/16900 measured by the Bayer enamel test sieve and is also absent of halogenated anions, and which is useful as enamel coating agent for the preparation of enamel coatings with improved resistance to corrosion by any of the methods disclosed in the state of the art, especially by electrophoretic porcelain enamelling (EPE) technique.

Without being bound by any theory, it is believed that the enamel composition of the invention inhibits the adsorption of species such as halogenated ions at the phase boundary steel/enamel increasing the adhesion between the enamel coating and the metal substrate. Furthermore, the enamel composition of the invention allows preparing enamel coating with the optimal thickness and appropriate homogeneous surface morphology for reducing corrosion velocity and fracture during the preparation process.

Thus, a first aspect of the present invention relates to an enamel composition comprising: a glass frit; from 0.1% to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions.

A second aspect of the present invention relates to the use of the enamel composition of the first aspect of the invention as an electrophoretic porcelain enamel coating agent.

A third aspect of the present invention relates to a process for the preparation of an enamel coating by an electrophoretic porcelain enamelling process which comprises: (i) contacting a metal substrate which is the anode and a cathode with an enamel composition as defined in the first aspect of the invention; (ii) applying an appropriate current density for an appropriate deposition time to promote the deposition of the enamel composition on the surface of the metal substrate; (iii) drying the enamel coating deposited on the metal substrate; and (iv) sintering the dried enamel coating.

Finally, the fourth aspect of the invention relates to an enamel coating obtainable by the process as defined in the third aspect of the invention.

### BRIEF DESCRIPTION OF THE DRAWINGS

Figure 1 shows the SEM images of carbon steel (CS) substrate (a), CS substrate tested by cyclic voltammetry (CV) using comparative enamel composition of Example 1 (b) and CS substrate tested by CV using enamel composition of Example 1 (c).
Figure 2 shows the optical images of CS substrate sample (a), CS substrate tested by CV using comparative enamel composition of Example 1 (b) and CS substrate tested by CV using enamel composition of Example 1 (c).
Figure 3 shows the optical images of CS substrate (a), EPE coatings using the comparative enamel composition of Example 1 (b) and the EPE coatings using the enamel composition of Example 1 (c).

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

In the context of the invention, the terms "enamel" or "porcelain enamel" or "vitreous enamel" have the same meaning and are used interchangeably. They refer to a thin layer which comprises a glass frit applied onto the surface of a metal substrate or a part thereof.
The terms "stabilizer" or "stabilizing agent" have the same meaning and are used interchangeably. They refer to any agent that stabilizes one or more agents of the composition that can act to stabilize the agent or agents against spontaneous or unwanted reactivity in use and/or in storage.

The term "binder" refers to the film-forming constituent of the enamel compositions that provides the enamel with flexibility. It is also a chemical dispersant, suspension stabilizer and viscosity modifier.

The term "pH regulator" refers to an agent added to the enamel composition to change the pH until adjusting to the appropriate pH that is from 10 to 13.

The term "refractory material" refers to an agent added to the enamel composition to make enamel composition less fusible and able to resist subsequent sintering process.

The term "cohesive agent" refers to an agent added to the enamel composition to strengthen the dried slip.

The term "reducing agent" refers to an agent added to the enamel composition to provide protection under high temperature conditions.

The term "surfactant" refers to a material which lowers the surface tension of a liquid and the interfacial tension between two liquids, allowing their easier mixing and spreading. Surfactants have a hydrophilic head that is attracted to water molecules and a hydrophobic tail that repels water and simultaneously attaches itself to oil and grease in dirt. These opposing forces loosen the dirt and suspend it in the water, having the ability to remove it from surfaces such as the human skin, textiles, and other solids, when surfactants are dissolved in water.

The term "anionic surfactant" refers to a surfactant including an anionic moiety covalently bonded to a non-polar moiety. Anionic surfactants do not contain at least one covalently bonded cationic moiety.

The term "percentage (%) by weight per 100g of the glass frit" refers to the percentage of each ingredient of the enamel composition expressed in grams in relation to 100 g of the glass frit.

The term "mL per 100 g of the glass frit" refers to the amount of water expressed in mL in relation to 100 g of the glass frit.

As mentioned above, an aspect of the present invention refers to an enamel composition as defined in claim 1. In comparison with the enamel compositions of the state of the art, the enamel compositions of the present invention has the appropriate specific gravity, conductivity and viscosity for being used in enamelling processes to obtain enamel coating having more resistant to corrosion.

As it is shown in the Examples the enamel compositions of the invention allow preparing enamel coating by EPE having a thickness about 120 µm which is considered the optimal thickness for having an improved corrosion protection and a low risk of fracture during the drying and sintering steps of the EPE coating process. Furthermore, as it is also shown in the Examples, the specific composition of the enamel of the invention avoids the formation of defects at the interface between the surface of the metal substrate and the enamel coating and therefore, reducing the velocity of corrosion.

The enamel composition of the invention comprises a glass frit. The terms "glass frit" or "frit" or "glass-forming frit" have the same meaning and are used interchangeably. They refer to a fine glass powder that is formed by grinding glass or by other means known in the art. A typical glass frit composition includes vitrifiable glass powders made from glasses such as boroaluminosilicate, borosilicate, lead silicate, zinc silicate, zinc borosilicate, phosphate silicate, and bismuth borosilicate. The glass frit of the present invention comprises a mixture of the oxides selected from 50% to 55% by weight of SiO₂, from 12.5% to 14%by weight of Na₂O, from 6% to 7% by weight of K₂O, from 14% to 16% by weight of B₂O₃, from 5% to 8% by weight of TiO₂, from 4% to 5% by weight of CaO and from 1 % to 3% by weight of CoO.

The terms "fineness of grinding" or "grinding fineness" have the same meaning and are used interchangeably. They refer to the measure of the quantity of enamel suspension that does not pass through a certain test sieve (standardized in accordance with ISO 3310/1). The standardized sieves numbers indicate the mesh per cm² in the sieves.

In this invention, this parameter has been calculated based on the Bayer enamel test sieve (This test is correlated to the standard Methods of Test for Sieve Analysis of Wet Milled and Dry Milled Porcelain Enamel are given in the ASTM Standards: C285-88:2005). This test comprises the following items: sieving funnel of transparent plastic with test sieves made of phosphor bronze in a plastic screw base, graduated measuring tube with stopper, funnel tube, and plastic measuring cup. The method of Bayer enamel process comprises filling the measuring cup (12.5 mL) with the slip to the brim. Rinse the sample through the funnel tube onto the test sieve and wash the slip with additional water through the test sieve. It is best to swing the sieving funnel in a container of water. When the fine grains are washed out, the coarse particles being bigger than the mesh aperture of the test sieve remain on the test sieve. Then close the graduated measuring tube with the stopper, fill it with water and put the sieving funnel on it. Allow a strong jet of water to pass from the outside through the sieve. Remove any existing air bubbles by gentle knocking and dislodge the sieve residue by agitation after which it drops into the measuring tube, where the amount can immediately be read on the graduated scale.

The results are presented as Bayer enamel test sieve units referring a specific mesh number expressed as A/B, wherein, A is a number referred to the number read on the graduated scale mentioned above. The scale is graduated from 0 to 12 units; and B is a number standardized sieve number that indicates the mesh per cm² in the sieve which is related with the screen aperture of the sieve. In this invention, a sieve of 16900 was used, which is equivalent to 40 µm of screen aperture.

The enamel composition of the invention is that wherein the fineness of grinding is comprised from 0/16900 to 12/16900 measured by the Bayer enamel test sieve. Thus, 0/16900 means that all the enamel particles pass through the sieve 16900 which means that all the enamel particles have a particle size lower than 40 µm. As there is no enamel residue retained on the sieve, no material fills the graduated measuring tube, thus the reading on the graduated scale is zero. On the other hand, if a certain amount of the enamel sample is retained by the sieve, this means that the particle size of the retained material has a particle size higher than 40 µm. When this retained material is poured into the graduated measuring tube, the reading of the graduated scale will be one between 0 and 12.

As the fineness of grinding measured by this method does not give information of the complete granulometric curve of the sample, in this invention measurements of particle size distribution were additionally carried out with a particle size analyser Malvern Instruments Ltd, Mastersizer 3000 MAZ6140. Thus, the following correlation was found:

| Grinding Fineness | D90 (µm) |
|---|---|
| 0.1/16900 | 27.4 |
| 2.8/16900 | 56.4 |
| 5.5/16900 | 65.9 |
| 9.0/16900 | 74.3 |
| 11.5 | 76.9 |

In this table, the term "D90" means that the 90% of the particles have a particle size lower the percentage of the sample.

The fineness of grinding of the enamel composition of the invention allows using it as an enamel coating agent for obtaining the enamel coating with enhanced corrosion properties.

In an embodiment, optionally in combination with one or more features of the various embodiments described above or below, the enamel composition is that wherein the fineness of grinding of the particles of the glass frit is comprised from 0.25/16900 to 6/16900; preferably comprised from 0.5/16900 to 2/16900 measured by the Bayer enamel test sieve. These enamel compositions are especially advantageous for being use in enamelling processes performed by EPE processes.

In an embodiment, optionally in combination with one or more features of the various embodiments described above or below, the enamel composition is absent of halogenated anions selected from the group consisting of fluoride, chloride, bromide and iodide; preferably the enamel composition is absent of halogenated anions selected from the group consisting of chloride, bromide and iodide. In a particular embodiment, optionally in combination with one or more features of the various embodiments described above or below, the enamel composition of the invention is absent of chloride anions.

In an embodiment, optionally in combination with one or more features of the various embodiments described above or below, the enamel composition of the invention is that wherein the amount of stabilizer is comprised from 0.5% to 10% by weight per 100g of the glass frit; preferably from 3% to 5% by weight per 100g of the glass frit. In an embodiment, optionally in combination with one or more features of the various embodiments described above or below, the stabilizer is selected from the group consisting of clay, bentonite, bentone and mixture thereof. Preferably, the stabilizer is clay. In a more preferred embodiment, the stabilizer comprises from 0.5% to 10% by weight of clay per 100 g of the glass frit. More preferably, the stabilizer comprises 4% by weight of clay per 100 g of the glass frit.

In an embodiment, optionally in combination with one or more features of the various embodiments described above or below, the enamel composition of the invention is that wherein the amount of the inorganic salt is comprised from 0.005% to 0.5% by weight per 100g of the glass frit; preferably, from 0.009% to 0.05% by weight per 100g of the glass frit. In a particular embodiment, the amount of the inorganic salt is 0.01 % by weight per 100 g of the glass frit. In an embodiment, optionally in combination with one or more features of the various embodiments described above or below, the inorganic salt is selected from the group consisting of alkaline metal nitrate, alkaline earth metal nitrate, alkaline metal sulphate, alkaline earth metal sulphate, alkaline metal phosphate and alkaline earth metal phosphate. Examples of inorganic salts appropriates for the enamel compositions of the invention includes, but is not limited to, potassium nitrate, sodium nitrate, lithium nitrate, potassium sulphate, sodium sulphate, potassium phosphate, sodium phosphate and mixture thereof. In an embodiment, optionally in combination with one or more features of the various embodiments described above or below, the anion of the inorganic salt is nitrate; preferably the inorganic salt is potassium nitrate. In a particular embodiment, the inorganic salt is potassium nitrate in an amount comprised from 0.005 to 0.5 % by weight per 100 g of the glass frit; preferably 0.01% by weight of potassium nitrate per 100 g of the glass frit.

In an embodiment, optionally in combination with one or more features of the various embodiments described above or below, the enamel composition of the invention is that wherein the amount of the reducing agent is comprised from 0.05% to 0.5% by weight per 100g of the glass frit. In a particular embodiment, the amount of the reducing agent is 0.1 % by weight per 100 g of the glass frit. In an embodiment, optionally in combination with one or more features of the various embodiments described above or below, the reducing agent is selected from the group consisting of sodium nitrite, potassium nitrite and mixture thereof. In an embodiment, optionally in combination with one or more features of the various embodiments described above or below, the reducing agent is sodium nitrite in an amount comprised from 0.05% to 0.5% by weight per 100 g of the glass frit; preferably 0.1 % by weight of sodium nitrite per 100 g of the glass frit.

The composition of the invention comprises from 0% to 0.04% by weight of an anionic surfactant per 100 g of the glass frit. In an alternative embodiment, optionally in combination with one or more features of the various embodiments described above or below, the composition of the invention that is suitable for an electrophoretic porcelain enamel process that comprises from 0.01 % to 0.03% by weight of an anionic surfactant per 100 g of the glass frit. These enamel compositions are especially advantageous for being use in enamelling processes performed by EPE processes. In an embodiment, optionally in combination with one or more features of the various embodiments described above or below, the anionic surfactant is selected from the group consisting of alkyl sulphates and alkyl-ether sulphates; preferably selected from the group consisting of ammonium lauryl sulphate, sodium lauryl sulphate, sodium laureate sulphate and sodium myreth sulphate; preferably the anionic surfactant is sodium dodecyl sulphate. In an embodiment, optionally in combination with one or more features of the various embodiments described above or below, the anionic surfactant is sodium dodecyl sulphate in an amount comprised from 0.01% to 0.03% by weight per 100g of the glass frit; preferably in an amount of 0.02% by weight per 100g of the glass frit.

In an embodiment, optionally in combination with one or more features of the various embodiments described above or below, the enamel composition of the invention is that wherein the amount of water is comprised from 50 mL to 90 mL per 100g of the glass frit; preferably, the amount of water is comprised from 65 mL to 75 mL In a particular embodiment, optionally in combination with one or more features of the various embodiments described above or below, the amount of water is 70mL per 100g of the glass frit.

In an embodiment, optionally in combination with one or more features of the various embodiments described above or below, the enamel composition of the invention further comprises from 0.06% to 2% by weight of a binder per 100g of the glass frit; preferably, from 0.1% and 0.5% by weight per 100g of the glass frit; more preferably, from 0.1% and 0.2% by weight per 100g of the glass frit. In a particular embodiment, the amount of binder is 0.15% by weight per 100 g of glass frit. In an embodiment, optionally in combination with one or more features of the various embodiments described above or below, the binder is selected from the group consisting of carboxymethyl cellulose, xanthan gum and mixture thereof. Preferably, the binder is carboxymethyl cellulose in an amount of 0.1 % to 0.2% by weight per 100g of glass frit; particularly, the binder is carboxymethyl cellulose in an amount of 0.15% by weight per 100g of the glass frit.

In an embodiment, optionally in combination with one or more features of the various embodiments described above or below, the enamel composition of the invention further comprising from 5% to 40% by weight of a refractory material per 100 grams of the glass frit. Preferably, the amount of the refractory material is comprised from 6% to 20% by weight of a refractory material per 100 grams of glass frit; more preferably from 8% to 15% by weight of a refractory material per 100 grams of the glass frit. In a particular embodiment, optionally in combination with one or more features of the various embodiments described above or below, the enamel composition of the invention further comprising refractory material in an amount of 10% by weight of a refractory material per 100 grams of the glass frit. In an embodiment, optionally in combination with one or more features of the various embodiments described above or below, the refractory material is selected from the group consisting of silica, clay, alumina, zircon, feldspar, zinc oxide and inorganic pigment; preferably, the refractory material is silica. In a particular embodiment, the refractory material is silica in form of quartz having a particle size of 200µm in an amount of 10% by weight per 100 grams of the glass frit.

In an embodiment, optionally in combination with one or more features of the various embodiments described above or below, the enamel composition of the invention further comprising from 0.1 % to 5% by weight of a cohesive agent per 100 grams of the glass frit; preferably comprised from 0.5% to 2% by weight per 100 grams of the glass frit; more preferably, from 0.8% to 1.5% by weight per 100 grams of the glass frit. In a particular embodiment, optionally in combination with one or more features of the various embodiments described above or below, the amount of cohesive agent is 1 % by weight per 100 grams of the glass frit. In an embodiment, optionally in combination with one or more features of the various embodiments described above or below, the cohesive agent is selected from the group consisting of urea, traganth and mixture thereof; preferably, the cohesive agent is urea. In a particular embodiment, optionally in combination with one or more features of the various embodiments described above or below, the cohesive agent is urea in an amount of 1 % by weight per 100g of the glass frit.

In an embodiment, optionally in combination with one or more features of the various embodiments described above or below, the enamel composition which is suitable for an electrophoretic porcelain enamel process that comprises an appropriate amount of a pH regulator to adjust pH from 10 to 13; preferably from 11.5 to 12.5. Appropriate pH regulators for the present invention can be any one disclosed in the state of the art. In an embodiment, optionally in combination with one or more features of the various embodiments described above or below, the pH regulator is selected from the group consisting of alkaline hydroxide, alkaline earth metal hydroxide, alkaline aluminate, alkaline earth metal aluminate, alkaline sulphate and mixture thereof; preferably the pH regulator is selected from the group consisting of an alkaline sulphate, an alkaline hydroxide, an alkaline aluminate and mixture thereof; preferably selected form the group consisting of sodium hydroxide, potassium hydroxide, sodium aluminate and sodium sulphate. In a particular embodiment, optionally in combination with one or more features of the various embodiments described above or below, the pH regulator is sodium aluminate; preferably in an appropriate amount to achieve pH 12.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; and from 0.06% to 2% by weight of a binder per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; and from 0.1 % to 0.5% by weight of a binder per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; and from 0.1 % to 0.2% by weight of a binder per 100g of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; and from 5% to 40% by weight of a refractory material per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; and from 6% to 20% by weight of a refractory material per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; and from 8% to 15% by weight of a refractory material per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; and from 0.1% to 5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01% to 0.03% by weight of an anionic surfactant per 100g of the glass frit; from 50 to 90 mL of water per 100g of the glass frit; and from 0.5% to 2% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; and from 0.8% to 1.5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01% to 0.03% by weight of an anionic surfactant per 100g of the glass frit; from 50 to 90 mL of water per 100g of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; and an appropriate amount of a pH regulator to adjust pH from 11.5 to 12.5; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; from 0.06% to 2% by weight of a binder per 100g of the glass frit; and from 5% to 40% by weight of a refractory material per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.1 % to 0.5% by weight of a binder per 100g of the glass frit; and from 6% to 20% by weight of a refractory material per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.1 % to 0.2% by weight of a binder per 100g of the glass frit; and from 8% to 15% by weight of a refractory material per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01 % to 0.7% by weight of reducing agent per 100g of the glass frit; from 0% to 0.04% by weight of an anionic surfactant per 100g of the glass frit; from 40 to 100 mL of water per 100g of the glass frit; from 0.06% to 2% by weight of a binder per 100g of the glass frit; and from 0.1 % to 5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.1 % to 0.5% by weight of a binder per 100g of the glass frit; and from 0.5% to 2% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.1 % to 0.2% by weight of a binder per 100g of the glass frit; and from 0.8% to 1.5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01 % to 0.7% by weight of reducing agent per 100g of the glass frit; from 0% to 0.04% by weight of an anionic surfactant per 100g of the glass frit; from 40 to 100 mL of water per 100g of the glass frit; from 0.06% to 2% by weight of a binder per 100g of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.1 % to 0.5% by weight of a binder per 100g of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.1 % to 0.2% by weight of a binder per 100g of the glass frit; and an appropriate amount of a pH regulator to adjust pH from 11.5 to 12.5; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1% to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; from 5% to 40% by weight of a refractory material per 100 grams of the glass frit; and from 0.1 % to 5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 6% to 20% by weight of a refractory material per 100 grams of the glass frit; and from 0.5% to 2% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 8% to 15% by weight of a refractory material per 100 grams of the glass frit; and from 0.8% to 1.5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; from 5% to 40% by weight of a refractory material per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 6% to 20% by weight of a refractory material per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 8% to 15% by weight of a refractory material per 100 grams of the glass frit; and an appropriate amount of a pH regulator to adjust pH from 11.5 to 12.5; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; from 0.1 % to 5% by weight of a cohesive agent per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.5% to 2% by weight of a cohesive agent per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.8% to 1.5% by weight of a cohesive agent per 100 grams of the glass frit; and an appropriate amount of a pH regulator to adjust pH from 11.5 to 12.5; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01 % to 0.7% by weight of reducing agent per 100g of the glass frit; from 0% to 0.04% by weight of an anionic surfactant per 100g of the glass frit; from 40 to 100 mL of water per 100g of the glass frit; from 0.06% to 2% by weight of a binder per 100g of the glass frit; from 5% to 40% by weight of a refractory material per 100 grams of the glass frit; and from 0.1 % to 5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.1 % to 0.5% by weight of a binder per 100g of the glass frit; from 6% to 20% by weight of a refractory material per 100 grams of the glass frit; and from 0.5% to 2% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.1 % to 0.2% by weight of a binder per 100g of the glass frit; from 8% to 15% by weight of a refractory material per 100 grams of the glass frit; and from 0.8% to 1.5% by weight of a cohesive agent per 100 grams of the glass frit; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01 % to 0.7% by weight of reducing agent per 100g of the glass frit; from 0% to 0.04% by weight of an anionic surfactant per 100g of the glass frit; from 40 to 100 mL of water per 100g of the glass frit; from 0.06% to 2% by weight of a binder per 100g of the glass frit; from 5% to 40% by weight of a refractory material per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.1 % to 0.5% by weight of a binder per 100g of the glass frit; from 6% to 20% by weight of a refractory material per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.1 % to 0.2% by weight of a binder per 100g of the glass frit; from 8% to 15% by weight of a refractory material per 100 grams of the glass frit; and an appropriate amount of a pH regulator to adjust pH from 11.5 to 12.5; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.1 % to 20% by weight of a stabilizer per 100g of the glass frit; from 0.001 % to 1 % by weight of an inorganic salt per 100g of the glass frit; from 0.01% to 0.7% by weight of reducing agent per 100g of the glass frit; from 0% to 0.04% by weight of an anionic surfactant per 100g of the glass frit; from 40 to 100 mL of water per 100g of the glass frit; from 0.06% to 2% by weight of a binder per 100g of the glass frit; from 5% to 40% by weight of a refractory material per 100 grams of the glass frit; from 0.1 % to 5% by weight of a cohesive agent per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0/16900 to 12/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 0.5% to 10% by weight of a stabilizer per 100g of the glass frit; from 0.005% to 0.5% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 50 to 90 mL of water per 100g of the glass frit; from 0.1 % to 0.5% by weight of a binder per 100g of the glass frit; from 6% to 20% by weight of a refractory material per 100 grams of the glass frit; from 0.5% to 2% by weight of a cohesive agent per 100 grams of the glass frit; and an appropriate amount of a pH regulator to adjust pH from 10 to 13; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.25/16900 to 6/16900 measured by the Bayer enamel test sieve; and with the proviso that the enamel composition is absent of halogenated anions; preferably absent of chloride anions.

In an embodiment, optionally in combination with one or more features of the various embodiments described above or below, the enamel composition comprises: a glass frit; from 3% to 5% by weight of a stabilizer per 100g of the glass frit; from 0.009% to 0.05% by weight of an inorganic salt per 100g of the glass frit; from 0.05% to 0.5% by weight of reducing agent per 100g of the glass frit; from 0.01 % to 0.03% by weight of an anionic surfactant per 100g of the glass frit; from 65 to 75 mL of water per 100g of the glass frit; from 0.1 % to 0.2% by weight of a binder per 100g of the glass frit; from 8% to 15% by weight of a refractory material per 100 grams of the glass frit; from 0.8% to 1.5% by weight of a cohesive agent per 100 grams of the glass frit; and an appropriate amount of a pH regulator to adjust pH from 11.5 to 12.5; wherein: the anion of the inorganic salt is selected from the group consisting of nitrate, sulphate and phosphate; the reducing agent is selected from the group consisting of alkaline metal nitrite, alkaline earth metal nitrite and mixture thereof; the fineness of grinding of the glass frit is comprised from 0.5/16900 to 2/16900 measured by the Bayer enamel test sieve; and with the proviso that the enamel composition is absent of halogenated anions; preferably absent of chloride anions.

Other aspect of the present invention refers to a process for the preparation of the enamel composition as defined above. The process comprises: (a) Mixing the glass frit, the stabilizer, the reducing agent and the inorganic salt in the water; (b) Milling the suspension obtained in step (a). In an alternative embodiment, the process comprises: (a) Mixing the glass frit, the stabilizer, the reducing agent and the inorganic salt in the water; (b) Milling the suspension obtained in step (a); and (c) adding the anionic surfactant to the suspension obtained in step (b); and (d) stirring the suspension obtained in step (c).

In an embodiment of the invention, optionally in combination with one or more features of the various embodiments described above or below, the obtained suspension in step (a) is milled for period comprised from 10 min to 20 min, preferably 15 min. In a particular embodiment the suspension obtained in step (a) is milled with a ball mill for a period comprised from 10 min to 20 min, preferable 15 min.

The milling step can be performed by any method disclosed in the state of the art. Examples of methods appropriate for milling the suspension containing the glass frit include, but is not limited to, ball mill, rod mill, autogenous mill, pebble mill, high-pressure grinding rolls and tower mill. In an embodiment of the invention the resulting suspension obtained in step (b) as defined in the present invention has a fineness of grinding comprised from 0/16900 to 12/16900; preferably comprised from 2.5/16900 to 6/16900; more preferably comprised from 0.5/16900 to 2/16900 measured by the Bayer enamel test sieve.

In an embodiment of the invention, optionally in combination with one or more features of the various embodiments described above or below, when the enamel composition further comprises a binder, a refractory material, a cohesive agent or mixture thereof, the process further comprises an additional step (a') after step (a) which comprises; adding the binder, the refractory material, the cohesive agent or a mixture thereof to the suspension obtained in step (a).

In a particular embodiment, optionally in combination with one or more features of the various embodiments described above or below, the process for the preparation of the enamel composition of the invention comprises: (a) Mixing the glass frit, the stabilizer, the reducing agent and the inorganic salt in the water; (a') Adding the binder, the refractory material, the cohesive agent or a mixture thereof to the suspension obtained in step (a); (b) Milling the suspension obtained in step (a').

In a particular embodiment, optionally in combination with one or more features of the various embodiments described above or below, the process for the preparation of the enamel composition of the invention comprises: (a) Mixing the glass frit, the stabilizer, the reducing agent and the inorganic salt in the water; (a') Adding the binder, the refractory material, the cohesive agent or a mixture thereof to the suspension obtained in step (a); (b) Milling the suspension obtained in step (a'); and (c) adding the anionic surfactant to the suspension obtained in step (b); and (d) stirring the suspension obtained in step (c).

In an alternative embodiment of the invention, optionally in combination with one or more features of the various embodiments described above or below, when the enamel composition of the invention comprises a pH regulator, the process further comprises an additional step (b') after step (b) which comprises adding the appropriate amount of pH regulator to reach a pH comprised from 10 to 13; preferably comprised from 11.5 to 12.5; more preferably to reach pH 12.

In a particular embodiment, optionally in combination with one or more features of the various embodiments described above or below, the process for the preparation of the enamel composition of the invention comprises: (a) Mixing the glass frit, the stabilizer, the reducing agent and the inorganic salt in the water; (b) Milling the suspension obtained in step (a); (b') adding the appropriate amount of pH regulator to reach a pH comprised from 10 to 13; and (c) adding the anionic surfactant to the suspension obtained in step (b'); and (d) stirring the suspension obtained in step (c).

In a particular embodiment, optionally in combination with one or more features of the various embodiments described above or below, the process for the preparation of the enamel composition of the invention comprises: (a) Mixing the glass frit, the stabilizer, the reducing agent and the inorganic salt in the water; (a') Adding the binder, the refractory material, the cohesive agent or a mixture thereof to the suspension obtained in step (a); (b) Milling the suspension obtained in step (a'); (b') adding the appropriate amount of pH regulator to reach a pH comprised from 10 to 13; and (c) adding the anionic surfactant to the suspension obtained in step (b'); and (d) stirring the suspension obtained in step (c).

In a particular embodiment, optionally in combination with one or more features of the various embodiments described above or below, the process for the preparation of the enamel composition of the invention comprises: (a) Mixing in a ball mill the glass frit, the stabilizer, the reducing agent and the inorganic salt in the water; (a') Adding the binder, the refractory material and the cohesive agent to the suspension obtained in step (a); (b) milling the obtained suspension for 15 min to obtain a suspension having a fineness of grinding from 0.5/16900 to 2/16900 measured by the Bayer enamel test sieve; (b') adding the appropriate amount of pH regulator to reach a pH comprised from 10 to 13; and (c) adding the anionic surfactant to the suspension obtained in step (b'); and (d) Stirring by mechanical shaker the suspension obtained in step (c) for 10 min.

Other aspect of the present invention refers to the use of the enamel composition as defined in the first aspect of the invention as an electrophoretic porcelain enamel coating agent. As it is mentioned above, the enamel composition of the invention has the appropriate composition and properties for being used as an enamel coating agent in electrophoretic porcelain enamelling (EPE) process. The composition of the enamel of the invention allows obtaining enamel coating on the surface of a metal substrate having more corrosion resistance as it is shown in the examples. All the embodiments disclosed above for the enamel composition of the first aspect also apply for its use as electrophoretic porcelain enamel coating agent.

Other aspect of the present invention refers to a process for the preparation of an enamel coating by an electrophoretic porcelain enamelling process which comprises: (i) contacting a metal substrate which is the anode and a cathode with an enamel composition as defined in the present invention; (ii) applying an appropriate current density for an appropriate deposition time to promote the deposition of the enamel composition on the surface of the metal substrate; (iii) drying the enamel coating deposited on the metal substrate; and (iv) sintering the dried enamel coating.

In an embodiment of the invention, optionally in combination with one or more features of the various embodiments described above or below, the metal substrate which is the anode is selected from the group consisting of a carbon steel cast iron, stainless steel and aluminium. Preferably, the metal substrate which is the anode is carbon steel. In an embodiment of the invention, optionally in combination with one or more features of the various embodiments described above or below, the cathode is a metal conductor. Examples of appropriate cathode for the present invention include, but is not limited to, carbon steel, cast iron, stainless steel and aluminium; preferably, the carbon steel. In an embodiment of the invention, optionally in combination with one or more features of the various embodiments described above or below, the metal substrate which is the anode is carbon steel and also the cathode is carbon steel.

In an embodiment of the invention, optionally in combination with one or more features of the various embodiments described above or below, step (i) of the process is performed by immersing the metal substrate which is the anode and the cathode in the enamel composition of the invention.

In an embodiment of the invention, optionally in combination with one or more features of the various embodiments described above or below, step (ii) of the process comprises applying a current density comprised from 1x10⁻² to 2x10⁻² A/cm²; preferably the current density is comprised form 4.3x10⁻³ to 1.6x10⁻² A/cm²; more preferably 8.3 x10⁻³ A/cm².

In an embodiment of the invention, optionally in combination with one or more features of the various embodiments described above or below, step (ii) of the process comprises applying a current density for a deposition time comprised from 20 s and 90 s; preferably comprised from 25 s and 50 s; more preferably 30 s.

In an embodiment of the invention, optionally in combination with one or more features of the various embodiments described above or below, step (ii) of the process comprises applying a current density comprised from 1x10⁻² to 2x10⁻² A/cm² for a deposition time comprised from 20 s and 90 s; preferably a current density comprised from 4.3x10⁻³ to 1.6x10⁻² A/cm² for a deposition time comprised from 25 s and 50 s. In a particular embodiment, optionally in combination with one or more features of the various embodiments described above or below, step (ii) of the process comprises applying a current density of 8.3 x10⁻³ A/cm² for a deposition time of 30s.

In an embodiment of the invention, optionally in combination with one or more features of the various embodiments described above or below, step (iii) can be performed by any method disclosed in the state of the art. Examples of methods appropriate for drying enamel coatings deposited on the metal substrate include hot air (convection type) and infrared (radiant type) dryers. In an embodiment, optionally in combination with one or more features of the various embodiments described above or below, step (iii) is performed at a temperature comprised from 80 °C to 120 °C, preferably 100 °C. In an embodiment of the invention, optionally in combination with one or more features of the various embodiments described above or below, step (iii) is performed for a period of time comprised from 10 min to 30 min; preferably 15 min. In a particular embodiment of the invention, optionally in combination with one or more features of the various embodiments described above or below, step (iii) is performed in an oven at 100 °C for 15 min.

In an embodiment of the invention, optionally in combination with one or more features of the various embodiments described above or below, step (iv) is performed by any method disclosed in the state of the art. Examples of methods appropriate for sintering the dried enamel coatings include hot air (convection type) and infrared (radiant type). In an embodiment, optionally in combination with one or more features of the various embodiments described above or below, step (iv) is performed at a temperature comprised from 750 °C to 900 °C; preferably comprised from 800 °C to 850 °C; more preferably 840 °C. In an embodiment of the invention, optionally in combination with one or more features of the various embodiments described above or below, step (iv) is performed for a period of time comprised from 4 min to 15 min; preferably comprised from 5 min to 10 min; more preferably 6 min. In a particular embodiment of the invention, optionally in combination with one or more features of the various embodiments described above or below, step (iv) is performed at an 840 °C for 6 min in a muffle furnace.
The enamel coating of the invention may be defined by its preparation process as defined above and therefore, the enamel coating obtainable by the process above is considered part of the invention. For the purposes of the invention the expressions "obtainable", "obtained" and equivalent expressions are used interchangeably, and in any case, the expression "obtainable" encompasses the expression "obtained". All the embodiments disclosed above for the enamel composition of the invention and the processes for the preparation of the enamel composition and the EPE process also apply for the enamel coating obtainable by the EPE process. The enamel coating obtainable by the process of the invention has the appropriate thickness and physical/chemical properties for reducing the velocity of corrosion and prolonging the lifetime of enamel coating on the surface of metal substrates.

In an embodiment, optionally in combination with one or more features of the various embodiments described above or below, the enamel coating is obtainable by a process which comprises: (i) contacting a metal substrate which is the anode and a cathode with an enamel composition as defined above; (ii) applying an appropriate current density for an appropriate deposition time to promote the deposition of the enamel composition on the surface of the metal substrate; (iii) drying the enamel coating obtained in step (ii); and (iv) sintering the dried enamel coating obtained in step (iii). In an embodiment of the invention, optionally in combination with one or more features of the various embodiments described above or below, the enamel coating is obtainable by a process wherein step (ii) comprises applying a current density comprised from 1x10⁻² to 2x10⁻² A/cm² for a deposition time comprised from 20 s and 90 s; preferably a current density comprised from 4.3x10⁻³ to 1.6x10⁻² A/cm² for a deposition time comprised from 25 s and 50 s. In a particular embodiment, optionally in combination with one or more features of the various embodiments described above or below, the enamel coating is obtainable by a process wherein step (ii) comprises applying a current density of 8.3 x10⁻³ for a deposition time of 30 s.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### EXAMPLES

### Abbreviation

WE: Working Electrode
CE: Counter Electrode
RE: Reference Electrode
CS: Carbon Steel
SS: stainless Steel 316L
CV: Cyclic Voltammetry
E_{ocv}: Open Circuit Voltage
SHE: Standard Hydrogen Electrode
PEIS: Potentio Electrochemical Impedance Spectroscopy
LP: Linear Polarization
SEM: Scanning Electron Microscopy
EDXS: Energy Dispersive X-ray Spectroscopy

### 1. Enamel composition

### 1.A-Methods

Specific Gravity: The specific gravity measures were performed using a funnel to fill the graduated flask (100 cm³) with slip to overflowing. Scrape off the excess and wipe off any slip sticking to the outside. Then put the flask on the balance and tare. The number of grams gives the specific gravity of the slip directly by moving the decimal point two places to the left. The results are presented as weight (g)/volume (cm³).

Conductivity: The conductivity measures were carried out according to ISO 7888:1985.

Viscosity: The viscosity measures were carried out using the standard test method for viscosity by Ford Viscosity Cup according to ASTM D1200-10 (2014).

Fineness of grinding is measured as previously explained in the description.

### 1.B-Composition

Table 1 shows the qualitative and quantitative composition of the enamel compositions of the present invention (Example 1) and the composition of comparative enamel compositions outside the scope of the present invention (Comparative Example 1).

**Table 1**

| **Component** | | **Comparative enamel composition of Ex. 1** | **Enamel compositio n of Ex. 1** |
|---|---|---|---|
| | | (Weight %) | (Weight %) |
| Glass Frit | Typical oxide composition based on 50 % - 55 % SiO₂, 12.5 % - 14 % Na₂O, 6 % - 7 % K₂O, 14 % - 16 % B₂O₃, 5 % - 8 % TiO₂, 4% - 5 % CaO 1 % - 3%CoO. | 100 | 100 |
| Stabilizer | Clay | 4 | 4 |
| | Bentonite | 0.5 | 0.5 |
| Inorganic salt | Sodium chloride | **0.01** | - |
| | Potassium nitrate | - | **0.01** |
| Reducing agent | Sodium nitrite | 0.1 | 0.1 |
| Refractory material | Quartz 200µm | 10 | 10 |
| Binder | Carboxymethyl cellulose (CMC) | 0.15 | 0.15 |
| Solvent | Distillate water | 70 | 70 |
| Anionic surfactant | Sodium dodecyl sulphate | 0.02 | 0.02 |
| Cohesive agent | Urea | 1 | 1 |
| pH regulator | Liquid sodium aluminate 43% | sq. | sq. |
| | | pH 11.9-12.1 | pH 11.9-12.1 |

| | | | |
|---|---|---|---|
| sq. represents "sufficient quantity" | | | |

Table 2 shows the physic-chemical properties of the enamel composition of Example 1 of the present invention and the comparative enamel composition of Example 1.

**Table 2**

| **Parameter** | **Units** | **Comparative enamel composition of Ex. 1** | **Enamel composition of Ex. 1** |
|---|---|---|---|
| pH | - | 12.10 | 12.05 |
| Specific gravity | g/cm³ | 1.58 | 1.60 |
| Conductivity | mS/cm | 2.75 | 2.59 |
| Viscosity (ford cup 2 measure) | min, s | 1'25" | 1'33" |
| Fineness of grinding | - | 1.1/16900-1.2/16900 | 0.9/16900-1/16900 |

### 1.C-Preparation Process

The enamel composition of Example 1 of the present invention and comparative enamel composition of Example 1 disclosed in section 1 B were prepared following the process which comprises:
(a) Milling the glass frit, the stabilizer, the reducing agent, the refractory material, the cohesive agent, the binder, the inorganic salt, and the water in a ball mill for 15 min to obtain a suspension having a fineness of grinding between 0.9/16900 and 1.2/16900;
(b) Adding the pH regulator to the suspension obtained in step (a) until reaching a pH between 11.9 and 12.1 and
(c) Adding the anionic surfactant to the suspension obtained in step (b); and
(d) Stirring by mechanical shaker the suspension obtained in step (c) for 10 min.

### 2. Anodic electrodeposition process

The anodic electrodeposition process was carried out using the enamel composition of Example 1 or alternatively the comparative enamel composition of Example 1.

### Electrode:

A square plate of carbon steel (CS) was used as anode/working electrode (WE) having 20 cm² of exposure area; and square plate of carbon steel was used as cathode/counter electrode (CE) having 20 cm² of exposure area. The distance between the anode-cathode was 2 cm.

### Pre-treatment of the substrates:

The anode and the cathode were pre-treated to eliminate the impurities and providing an increase of specific surface by sandblasting, using a Norblast FN-30T equipment. This treatment is the operation of forcibly propelling a stream of abrasive material against a surface under high pressure to smooth a rough surface, roughen a smooth surface, shape a surface, or remove surface contaminants. A pressurized fluid, typically air, or a centrifugal wheel is used to propel the blasting material. The abrasive particles used here were white corundum GR100 Coniex.

### Anodic electrodeposition:

Electrodes were immersed in 100 mL of the enamel composition of Example 1 or comparative enamel composition of Example 1 at room temperature (20 °C). A current density of 8.3x10⁻³ A/cm² for 30 s was applied using DC Regulated Power Supply Delta Elektronika BV ES075-2. The anode and the cathode were then removed from the suspension and rinsed with demineralized water to remove the loosely-adhering particles. The EPE coatings of the EPE coated anode were dried at 100 °C during 15 min in an oven (JP Selecta Digitronic 2005142) and were sintered at 840 °C during 6 min in a muffle furnace (Hobersal HDD230-PAD).

### 3. Thickness test

### Method

The thickness of the coatings obtained following the process as disclosed in section 2 using enamel composition of Example 1 or, alternatively the comparative enamel composition of Example 1 was measured by PosiTector^{®} 6000. Conforms to ISO 2178/2360/2808; PrEN ISO 19840; ASTM B499/D1186/D1400 /D7091/ E376/G12; BS 3900-C5; SSPC-PA2.

### Results

The mean thickness of the coatings obtained using the enamel composition of Example 1 or comparative enamel composition Example 1 are shown in the following Table 3:

**Table 3**

| EPE coating | Mean thickness ± standard deviation (µm) |
|---|---|
| **Ex. 1** | **116.67 ± 0.05** |
| Comparative Ex. 1 | 89.94 ± 0.05 |

As it is observed in the mean thickness of the ceramic coating obtained by anodic electrodeposition process, the coating obtained with the use of the enamel composition of the present invention has greater thickness compared to the coating obtained with the comparative enamel composition of Example 1 at the same electrodeposition conditions.

It is known that coating having a thickness value below 80 µm does not protect from corrosion meanwhile coatings having a thickness equal to or higher than 200 µm has an increase percentage of fracture during the finishing steps of the preparation process. Therefore, the enamel composition of the present invention is advantageous because allows obtaining ceramic coating with the appropriate thickness for an enhanced corrosion protection and low risk of fracture.

### 4. Electrochemical evaluation Test

### 4.1. Cyclic voltammetry

### Method

Cyclic voltammetry (CV) is a type of potentiodynamic electrochemical measurement that can be used to evaluate the electrochemical properties of an analyte in solution. CV generally involves ramping the potential of a working electrode linearly versus time like linear sweep voltammetry. Unlike linear sweep voltammetry, which ends when it reaches a set potential, the working electrode's potential ramp in CV is inverted when it reaches a set potential. The inversion can happen multiple times during a single evaluation. The current at the working electrode can be plotted versus the applied voltage to give the cyclic voltammogram trace. Open circuit voltage was measured at the beginning of each electrochemical experiment, which consist in a period of time during no potential or current is applied to the working electrode, as preconditioning time or for equilibration of the electrochemical cell.

### Conditions

WE: 0.25 cm² CS plate (5 mm x 5 mm x 0.97 mm)
CE: 20 cm² CS plate (50 mm x 40 mm x 0.97 mm)
RE: Ag/AgCl (KCl 3.5 M),
From E_{ocv} to + 2 V and to - 2 V.
Scanning rates of 1 mV/s, 10 mV/s, 100 mV/s, 1000 mV/s and 500 rpm.

### Process

A typical three-electrode set-up was used, WE, CE and RE. All three electrodes were connected to the potenciostat/galvanostat Bio Logic Science Instruments VMP 3 for data acquisition. The three-electrodes were immersed in 100 mL of the enamel compositions of Example 1 or comparative enamel composition of Example 1. As reference experiment (CS blank), all three-electrodes were immersed in 100 mL NaCl solution at 3.5 wt%. Cyclic voltammogram traces were obtained at scanning rate of 1 mV/s.

### Results

Cyclic voltammetry evaluations of enamel composition of Example 1, comparative enamel composition of Example 1 and reference experiment (CS blank) were performed. The corresponding current density obtained was analysed at the chloride reaction potential value (1.36 V vs. SHE), and is shown below:

**Table 4**

| **Samples** | **Current density (j) (mA/cm²)** |
|---|---|
| CS blank | 8.35 |
| **Enamel composition of Ex. 1** | **1.75** |
| Comparative enamel composition of Ex. 1 | 4.12 |

As it is shown in the previous Table 4, the enamel composition of Example 1 shows the lowest current density (1.75 mA/cm²) compared to the comparative enamel composition of Example 1 (4.12 mA/cm²), improving the electrophoretic deposition process over secondary reactions as chloride reaction. The absence of chloride ions in the enamel composition of the present invention (Ex.1) clearly avoids the electrochemical oxidation reaction of the chloride when the EPE coatings were prepared by anodic electrophoretic deposition. The advantageous in using the enamel composition of this invention prevents the pitting and corrosion of the CS substrates.

### 4.2. Linear Polarization

### Method

The Linear Polarization (LP) technique is used in corrosion monitoring. This technique is especially designed for the determination of a polarization resistance of a material and corrosion velocity (I_{corr}) through potential steps around the corrosion potential.

### Conditions

WE: 0.25 cm² of EPE coatings
CE: 20 cm² SS 316L plate (50 mm x 40 mm x 0.97 mm)
RE: Ag/AgCl (KCl 3.5M)
Media: 3.5 wt. %. NaCl solution
From E_{ocv} to + 2 V and to - 2 V.
Scanning rate of 1 mV/s and 500 rpm.

### Process

A typical three-electrode set-up was used, WE, CE and RE. All three electrodes were connected to the potenciostat/galvanostat Bio Logic Science Instruments VMP 3 for data acquisition. The three-electrodes were immersed in 100 mL of NaCl solution at 3.5 wt%. Linear Polarization traces were obtained.

Linear Polarization evaluations of the EPE coatings were carried out using the EPE coating samples, obtained by using the enamel composition of Example 1, comparative enamel composition of Example 1, as previously explained in section 2. These EPE coating samples were analysed as prepared.

### Results

Linear Polarization evaluations of the EPE coatings obtained by using the enamel composition of Example 1, comparative enamel composition of Example 1 and reference experiment (CS blank) were performed. The corrosion velocity (I_{corr}) was calculated and summarized in the following Table 5:

**Table 5**

| **Sample** | **I_{corr} µA** |
|---|---|
| CS blank | 7.11 |
| EPE coating obtained with enamel composition of Ex. 1 | **4.30** |
| EPE coating obtained with comparative enamel composition of Ex.1 | 9.14 |

As it is shown in the above results, the EPE coating obtained with enamel composition of Example 1 of the present invention has lower corrosion velocity (4.30 µA) compared to EPE coating obtained with comparative enamel composition of Example 1 (9.14 µA). It evidences that, when the anodic electrodeposition is performed using the enamel composition of the present invention without chloride anions, the chloride secondary reactions were avoided and also, the electrophoretic deposition process was improved. As consequence, the use of the enamel composition of the present invention leads to obtain EPE coatings that are highly resistant to corrosion.

### 5. SEM & EDXS

### Methods

The scanning electron microscope (SEM) is a type of electron microscope that produces images of a sample by scanning it with a focused beam of electrons. The electrons interact with atoms in the sample, producing various signals that can be detected and that contain information about the sample's surface topography and composition.

Energy dispersive X-ray spectroscopy (EDXS) is an analytical technique used for the elemental analysis or chemical characterization of a sample. It relies on an interaction of some source of X-ray excitation and a sample. Its characterization capabilities are due in large part to the fundamental principle that each element has a unique atomic structure allowing unique set of peaks on its X-ray emission spectrum. To stimulate the emission of characteristic X-rays from a specimen, a high-energy beam of charged particles such as electrons or protons (see PIXE), or a beam of X-rays, is focused into the sample being studied.

### Conditions

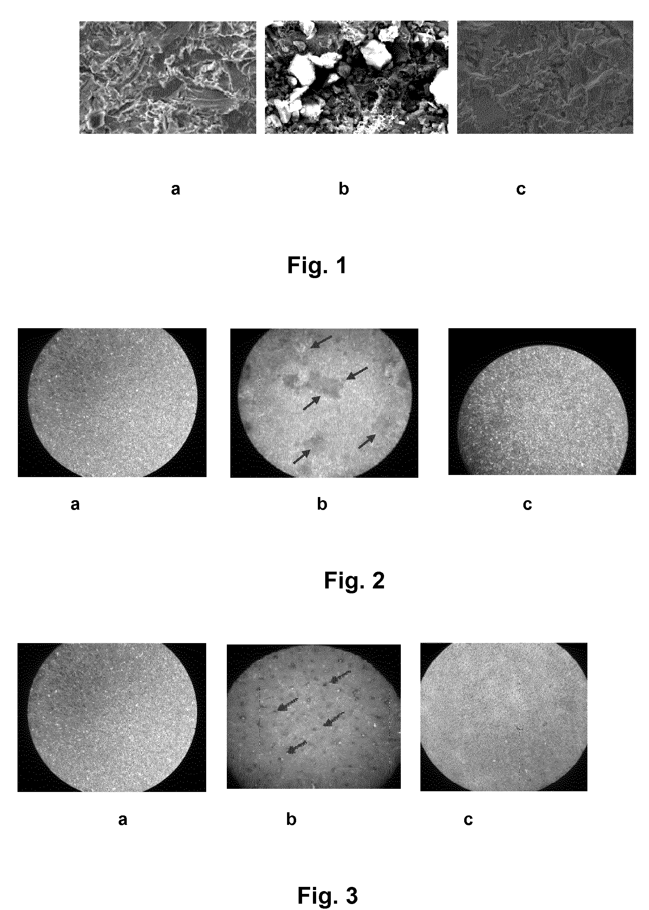

Scanning electron microscopy (SEM) was performed using a JEOL JSM 5500LV equipment, operating at 20 kV. The scanning electron microscope was equipped with an energy dispersive X-ray spectrometer (EDXS). The surface morphology and the chemical element analysis of CS substrate, CS substrate tested by CV using comparative enamel composition of Example 1 and CS substrate tested by CV using enamel composition of Example 1 were characterized. SEM images were recorded as x1000 (10 µm) (Figure 1) magnification. EDXS spectra of the samples were recorded as x1000 (10 µm) magnification.
CS substrate sample, CS substrate tested by CV using comparative enamel composition of Example 1 and CS substrate tested by CV using enamel composition of Example 1 were rinsed with demineralized water, dried with air and analysed directly.

### Results

Figure 1 shows the surface morphology of CS substrate (a), CS substrate tested by CV using comparative enamel composition of Example 1 (b) and CS substrate tested by CV using enamel composition of Example 1 (c).
As it is shown in the SEM images, CS substrate using enamel composition of Example 1 (c) have a homogeneous and non-damaged surface morphology compared to the CS substrates using enamel composition of comparative Example 1 (b), which shows a heterogeneous and damaged surface morphology.. In this way, the substitution of inorganic salt containing chloride species in the enamel composition, provide an advantage to maintain the CS substrates as homogeneous morphology.

The values obtained in the EDXS are summarized in the following table 6:

**Table 6**

| **Blank** | | | **CS tested by CV using enamel composition** | | | | | |
|---|---|---|---|---|---|---|---|---|
| CS | | | Comparative enamel composition of Ex.1 | | | Enamel composition of Ex.1 | | |
| Element | Weight (%) | Atomic (%) | Element | Weight (%) | Atomic (%) | Element | Weight (%) | Atomic (%) |
| OK | 2.97 | 9.45 | OK | 22.26 | 45.09 | OK | 7.63 | 20.84 |
| Al K | 2.08 | 3.93 | Na K | 1.49 | 2.10 | Al K | 5.32 | 8.62 |
| Fe K | 94.95 | 86.62 | Al K | 2.54 | 3.04 | Si K | 3.06 | 4.76 |
| totals | 100 | | Si K | 11.51 | 13.28 | Fe K | 83.99 | 65.77 |
| | | | Cl K | 0.14 | 0.13 | Totals | 100.00 | |
| | | | K K | 0.89 | 0.74 | | | |
| | | | Ca K | 0.58 | 0.47 | | | |
| | | | Fe K | 60.58 | 35.15 | | | |
| | | | Totals | 100.00 | | | | |

Furthermore, EDXS of CS substrates using comparative enamel composition of Example 1 show the chlorine presence (0.14 wt %), attributed to the chloride species responsible of the electrochemical chloride reaction during CV tests. These results demonstrate that the presence of chloride species in the CS substrates are the main promoting agents of the pitting defects in CS substrate and leads to further corrosion. Meanwhile, EDXS of CS substrates using enamel composition of Example 1 proves the absence of chloride species and, as consequence, the absence of secondary chloride reaction during the EPE process. Therefore, EPE coatings obtained using the enamel composition of Example 1, leads to a higher corrosion resistance.

### 6. Optical Images

### Conditions

Samples were analysed using a stereomicroscope Nikon SMZ 800 with a 10X zoom.

### Samples prepared in aqueous coating baths

CS substrate sample, CS substrate tested by CV using comparative enamel composition of Example 1 and CS substrate tested by CV using enamel composition of Example 1 were rinsed with demineralized water, dried with air and analysed directly.

### Samples prepared to obtain EPE coatings

On the other hand, optical images of EPE coatings using the comparative enamel composition of Example 1 and the enamel composition of Example 1 were captured.
All EPE coatings samples, obtained as explained previously in section 2, were analysed as prepared.

### Results

Figure 2 y Figure 3 shows the optical images of the samples.
Figure 2 shows the optical images of CS substrate sample (a), CS substrate tested by CV using comparative enamel composition of Example 1 (b) and CS substrate tested by CV using enamel composition of Example 1 (c). Figure 3 shows CS substrate (a), EPE coatings using the comparative enamel composition of Example 1 (b) and the EPE coatings using the enamel composition of Example 1 (c).

As it shown in Figure 2, from the optical images of the CS substrates tested by CV using the comparative enamel composition of Example 1, clearly shows the surface defects (see emphasized arrows in Figure 2b) comparing with the non-tested CS substrates as reference (Figure 2a). As can be observed previously in CV, the pitting defects can be attributed to the electrochemical secondary chloride reaction. In this way, the chloride reaction is the main promoting agent of pitting defects and further corrosion, as previously reported in section 4.

From the optical images of the CS substrates tested by CV using the enamel composition of Example 1 (Figure 2c), it is clearly evident the advantages of the substitution of chloride species in the enamel composition. It is possible to observe the absence of pitting defects attributed to the electrochemical secondary chloride reaction, showing a clear surface similar to non-tested CS substrate (Figure 2a).

As it shown in Figure 3, from the optical images of EPE coatings using the comparative enamel composition of Example 1, is clearly evident the presence of pitting defects (see emphasized arrows in Figure 3b) over the EPE coatings, which can be attributed to the effect of the interfacial corrosion caused by the use of inorganic salt based on chloride species in the enamel composition. Therefore, as can be observed in Figure 2c, the enamel composition of the present invention avoids defects at the CS substrate. As can be observed in Figure 3c, the enamel composition of the present invention avoids defects at the EPE coated CS substrate. This enamel composition not containing chlorides does not affect the interface CS substrates/EPE coatings, leading to homogeneous and defect free EPE coatings and enhancing the corrosion resistance.

### REFERENCES CITED IN THE APPLICATION

1. S. Pagliuca et al. "Porcelain (Vitreous) Enamels and Industrial Enamelling Processes. The preparation, application and properties of enamels" Chapter 10. Applications and Control, IEI, PEI, 3rd Ed., Italy, 2011 pages 446-449, 489-496.
2. "Pemco Enamel Manual", PEMCO Brugge bvba, 2nd Ed., Germany, 1975, pages 110-127.

## Claims

1. An enamel composition comprising:
a glass frit;
from 0.1 % to 20% by weight of a stabilizer per 100g of the glass frit;
from 0.001 % to 1 % by weight of an inorganic salt per 100g of the glass frit;
from 0.01 % to 0.7% by weight of reducing agent per 100g of the glass frit;
from 0% to 0.04% by weight of an anionic surfactant per 100g of the glass frit;
from 40 to 100 mL of water per 100g of the glass frit;
wherein:
the anion of the inorganic salt is selected from the group consisting of nitrate,
sulphate and phosphate;
the reducing agent is selected from the group consisting of alkaline metal nitrite, alkaline earth metal nitrite and mixture thereof;
the fineness of grinding of the glass frit is comprised from 0/16900 to 12/16900 measured by the Bayer enamel test sieve; and
with the proviso that the enamel composition is absent of halogenated anions.

2. The enamel composition according to claim 1, wherein the halogenated anion is a chloride anion.

3. The enamel composition according to any of the claims 1-2, which is suitable for an electrophoretic porcelain enamel process, and which further comprises an appropriate amount of a pH regulator to adjust pH from 10 to 13.

4. The enamel composition according to any of the claims 1-3, wherein the fineness of grinding of the glass frit is comprised from 0.5/16900 to 2/16900 measured by the Bayer enamel test sieve.

5. The enamel composition according to any of the claims 1-4, wherein the amount of stabilizer is comprised from 0.5% to 10% by weight per 100g of the glass frit.

6. The enamel composition according to any of the claims 1-5, wherein the anion of the inorganic salt is nitrate.

7. The enamel composition according to any of the claims 1-6, wherein the amount of anionic surfactant is comprised from 0.01 % to 0.03% by weight per 100g of the glass frit.

8. The enamel composition according to any of the claims 1-7, wherein the amount of water is comprised from 65mL to 75 mL per 100g of the glass frit.

9. The enamel composition according to any of the claims 1-8, further comprising from 0.06% to 2% by weight of a binder per 100g of the glass frit.

10. The enamel composition according to any of the claims 1-9, further comprising from 5% to 40% by weight of a refractory material per 100 grams of the glass frit.

11. The enamel composition according to any of the claims 1-10, further comprising from 0.1 % to 5% of a cohesive agent per 100 grams of the glass frit.

12. Use of the enamel composition as defined in any of the claims 1-11 as an electrophoretic porcelain enamel coating agent.

13. A process for the preparation of an enamel coating by an electrophoretic porcelain enamelling process which comprises:
(i) contacting a metal substrate which is the anode and a cathode with an enamel composition as defined in any of the claims 1-11;
(ii) applying an appropriate current density for an appropriate deposition time to promote the deposition of the enamel composition on the surface of the metal substrate;
(iii) drying the enamel coating deposited on the metal substrate; and
(iv) sintering the dried enamel coating.

14. The process according to claim 13, wherein the current density of step (ii) is comprised from 1x10⁻² to 2x10⁻² A/cm².

15. The process according to any of the claims 13-14, wherein the deposition time of step (ii) is comprised from 20s to 90s.

16. An enamel coating obtainable by the process as defined in any of the claims 13-15.
